# EUROPEAN PATENT APPLICATION

(11) **EP 1 563 750 A1**
(43) Date of publication of application: **17.08.2005**
(21) Application number: 05002089.0
(22) Date of filing: 02.02.2005
(51) Int. Cl.: A43B 7/12, A43B 7/08, A43B 13/12

(54) **Breathable sole structure for footwear**

(30) Priority: 10.02.2004 US 775350
(71) Applicant: Celgard Inc., Charlotte, South Carolina 28273 (US)
(72) Inventor: Lechhart, Fridtjof, 22397 Hamburg (DE); Martin, Tim W., Charlotte North Carolina 28226 (DE)
(74) Representative: Schröder, Richard

(57) **Abstract**

The instant invention is a breathable sole structure for footwear. The footwear sole structure includes an insole (12), an outsole (14), and a functional membrane system (16). The insole has an area with a plurality of holes therethrough. The outsole has an area with a plurality of holes therethrough. The functional membrane system has a microporous hydrophilic membrane (36) and a microporous hydrophobic membrane (38). The insole and the outsole are bonded to each other, so that the functional membrane system is sandwiched therebetween; and furthermore, the functional membrane system is juxtaposed to said areas.

## Description

The instant invention relates to a breathable sole structure for footwear.

Footwear, and in particular shoes, usually include two major components, a shoe upper and a sole. The general purpose of the shoe upper is to snuggly and comfortably enclose the foot. Ideally, the shoe upper should be made from an attractive, highly durable, comfortable materials or combination of materials. The sole, constructed from a durable material, is designed to provide traction and to protect the foot during use. The sole also typically serves the important function of providing enhanced cushioning and shock absorption during athletic activities to protect the feet, ankles, and legs of the wearer from the considerable forces generated.

Many kinds of footwear, such as athletic shoes, everyday walking shoes, and work boots have the drawback of poor ventilation. The shoe upper and sole do not allow the foot to breathe. Since the foot cannot breathe, perspiration cannot be removed. The accumulation of perspiration can then promote the growth of bacteria, fungi and the like as well as the accompanying unpleasant odors and skin problems.

U.S. Pat. No. 5,044,096, which is incorporated herein by reference, discloses an improved ventilation system for a shoe. In this patent, the shoe sole is made of an outsole and an insole with holes that traverse the thickness of the combined insole/outsole structure. The sole structure further includes a microporous waterproof membrane disposed between the insole and the outsole. This membrane allows the foot to breathe; thus, perspiration may be removed.

While the forgoing shoe ventilation solution has met with commercial success, there is still a need for better and improved ventilation in footwear.

The instant invention is a breathable sole structure for footwear. The footwear sole structure includes an insole, an outsole, and a functional membrane system. The insole has an area with a plurality of holes therethrough. The outsole has an area with a plurality of holes therethrough. The functional membrane system has a microporous hydrophilic membrane and a microporous hydrophobic membrane. The insole and the outsole are bonded to each other, so that the functional membrane system is sandwiched therebetween; and furthermore, the functional membrane system is juxtaposed to said areas.

For the purpose of illustrating the invention, there is shown in the drawings a form that is presently preferred; it being understood, however, that this invention is not limited to the precise arrangements and instrumentalities shown.
**Fig. 1** is a sectional view of a preferred embodiment of the instant invention;
**Fig. 2** is an isometric exploded view of a sole structure according to instant invention;

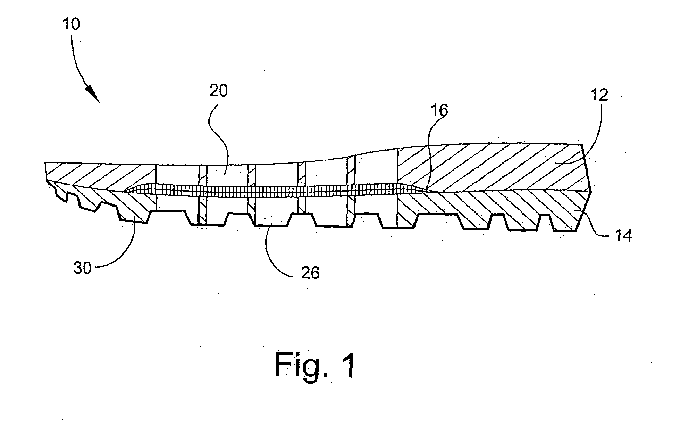

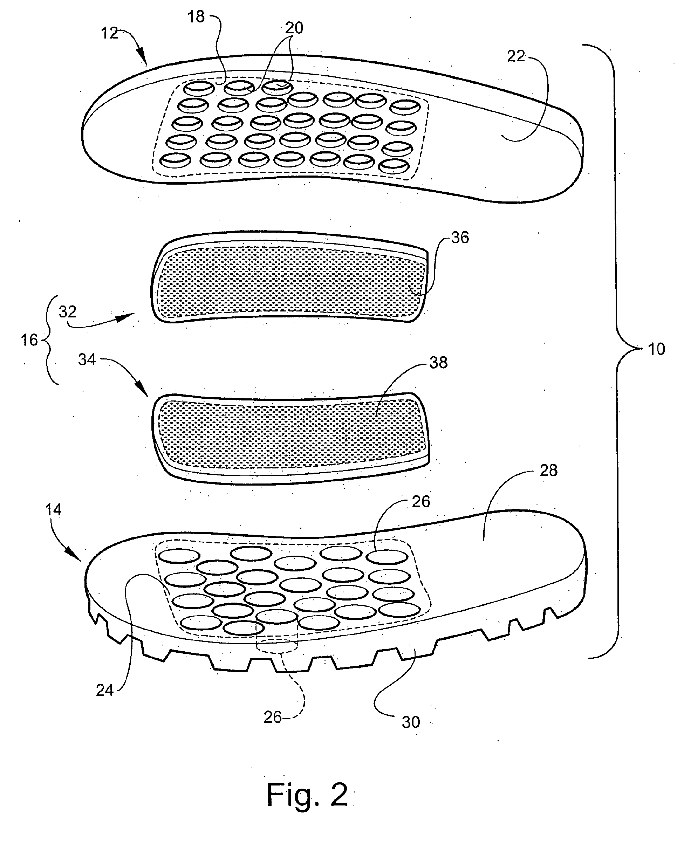

Referring to the drawings wherein like numerals indicate like elements, there is shown in Fig. 1 and Fig. 2, a preferred embodiment of a sole 10. Sole 10 includes insole 12, outsole 14, and functional membrane system 16. The insole 12 and the outsole 14 are bonded together, and the functional membrane system 16 is sandwiched therebetween. The insole 12 faces the interior of a shoe where the foot rests; while the outsole 14 is exposed to the outside world.

Insole 12 may be made of synthetic materials, rubbers, or similar materials. Insole 12 includes a perforated region 18. Perforated region 18 defines an area in which a plurality of holes 20 is provided. Holes 20 transverse the insole 12. Insole 12, further, includes an upper coupling region 22. The upper coupling region 22, as used herein, is defined as the region between the outer perimeter of the perforated region 183, and the perimeter of insole 12.

Outsole 14 may be made of synthetic materials, rubbers, or similar materials. Outsole 14 includes a perforated region 24. Perforated region 24 defines an area in which a plurality of holes 26 is provided. Holes 26 transverse the outsole 12. Outsole 12, further, includes a lower coupling region 28. The lower coupling region 28, as used herein, is defined as the region between the outer perimeter of the perforated region 24, and the perimeter of outsole 14. The outsole 14 may also include treads 30.

The functional membrane system 16 includes a hydrophilic membrane 32 and a hydrophobic membrane 34. A membrane, as used herein, refers to a thin pliable sheet which may be either porous (e.g., microporous) or nonporous. Preferably, membranes are microporous. Membranes may be made of synthetic polymers, cellulose, or synthetically modified cellulose. Synthetic polymers include, but are not limited to, polyethylene, polypropylene, polybutylene, poly (isobutylene), poly (methyl pentene), polysulfone, polyethersulfone, polyester, polyetherimide, polyacrylnitril, polyamide, polymethylmethacrylate (PMMA), ethylenevinyl alcohol, and fluorinated polyolefins. Preferably, membranes are made of polyolefin.

Hydrophilic membrane 32, preferably, absorbs moisture in order to facilitate the transpiration of the foot; thus, keeping the foot drier. Preferably, hydrophilic membrane 32 includes micropores 36. Hydrophilic membrane 32 may have a thickness in the range of 250µ to 1200µ; an average pore size in the range of 0.1µ to 1µ; a Gurley of 45 seconds/10cc; and an average porosity in the range of 60% to 70%. Furthermore, hydrophilic membrane 32 may have an absorption according to the thickness in the range of 20mg/cm² to 60mg/cm²; a desorption of 100%/2h; and a permeability to steam according to thickness in the range of 60mg/cm²/8h to 130mg/cm²/8h. Hydrophilic membrane 32 is commercially available under the name Aeroshoe or any other name from Daramic, Inc. of Charlotte, N.C.

Preferably, hydrophobic membrane 34 includes micropores 38. Hydrophobic membrane 34 may have an average porosity in the range of 30% to 60%; an average pore size in the range of 0.02µ × 0.08µ to 0.2µ × 1.5µ; a thickness in the range of 8µ to 50µ; a Gurley in the range of 5 to 100 seconds/10cc. Furthermore, hydrophobic membrane 34 may have a tensile strength (machine direction) in the range of 15kpsi to 19kpsi; and a tensile strength (transverse direction) in the range of 1.2kpsi to 2.2kpsi. Preferably, hydrophobic membrane 34 has a porosity of 55%; an average pore size of 0.209µ × 0.054µ); a thickness of 25µ or less; and a Gurley of at least 9 seconds/10cc. Hydrophobic membrane 34 is commercially available under the name Celgard 2500 from Celgard Corp. of Charlotte, N.C.

Preferably, hydrophilic membrane 32 and hydrophobic membrane 34 are bonded together to form a single bi-layer functional membrane system 16.

Insole 12 and outsole 14 are bonded together at the upper coupling region 22 and the lower coupling region 28, and the functional membrane system 16 is sandwiched therebetween, so that the hydrophilic membrane 32 is facing the perforated region 18, and the hydrophobic membrane 34 is facing the perforated region 24.

Insole 12 and outsole 14 may be bonded together by different known techniques, which include, but are not limited to, press-gluing method, or injection molding method. In press-gluing method, insole 12 and outsole 14 are separately molded in advance, and then, the functional membrane system 16 is placed between insole 12 and outsole 14, and then, insole 12 and outsole 14 are bonded to each other at the upper coupling region 22 and lower coupling region 28 by means of adhesives. In injection molding method, outsole 14 is injected into the mold, then, the functional membrane system 16 is positioned, and then, the insole 12 is injected. The resultant structure is a monolithic sole 10, which facilitates the ventilation of the foot while preventing water from penetrating into the shoe.

The final result of the insole 12 and outsole 14 bonded together with the functional membrane system sandwiched therebetween is sole 10, as shown in Fig. 1, which is impermeable to water in one direction to prevent the penetration of water into the shoe while allowing the foot to transpire in the opposite direction to provide better and improved footwear ventilation.

The present invention may be embodied in other forms without departing from the spirit and the essential attributes thereof, and, accordingly, reference should be made to the appended claims, rather than to the foregoing specification, as indicated the scope of the invention.

## Claims

1. A breathable sole structure for footwear comprising:
an insole having an area with a plurality of holes transversing said insole;
an outsole having an area with a plurality of holes transversing said outsole;
a functional membrane system, comprising a microporous hydrophilic membrane and a microporous hydrophobic membrane;
said insole and said outsole being bonded together; and
said functional membrane system being sandwiched between said insole and outsole, said functional membrane system further being located between said areas.

2. The breathable sole structure for footwear according to Claim 1, wherein said functional membrane system being a single laminated bi-layer functional membrane system.

3. The breathable sole structure for footwear according to Claim 1, wherein said insole and said outsole being bonded to each other by a method selected from the group consisting of press-gluing method, and injection molding method.

4. The breathable sole structure for footwear according to Claim 1, wherein said outsole further comprising a tread.

5. The breathable sole structure for footwear according to Claim 1, wherein said microporous hydrophilic membrane has a thickness in the range of 250µ to 1200µ; an average pore size in the range of 0.1µ to 1µ; a Gurley of 45 seconds/10cc; and a porosity in the range of 60% to 70%.

6. The breathable sole structure for footwear according to Claim 5, wherein said microporous hydrophilic membrane further having an absorption according to the thickness in the range of 20mg/cm² to 60mg/cm²; a desorption of 100%/2h; and a permeability to steam according to thickness in the range of 60mg/cm²/8h to 130mg/cm²/8h

7. The breathable sole structure for footwear according to Claim 1, wherein said microporous hydrophobic membrane having a porosity in the range of 30% to 60%; an average pore size in the range of 0.02µ × 0.08µ to 0.2µ × 1.5µ; a thickness in the range of 8µ to 50µ; and a Gurley in the range of 5 to 100 seconds/10cc.

8. The breathable sole structure for footwear according to Claim 7, wherein said microporous hydrophobic membrane further having a tensile strength (machine direction) in the range of 15kpsi to 19kpsi; and a tensile strength (transverse direction) in the range of 1.2kpsi to 2.2kpsi.

9. The breathable sole structure for footwear according to Claim 1, wherein said microporous hydrophobic membrane having a porosity of 55%; an average pore size of 0.209µ × 0.054µ; a thickness of 25µ or less; and a Gurley of at least 9 seconds/10cc.

10. The breathable sole structure for footwear according to Claim 1, wherein said microporous hydrophilic membrane comprising a polyolefin.

11. The breathable sole structure for footwear according to Claim 10, wherein said polyolefin being selected from the group consisting of a polyethylene, a polypropylene, and combination thereof.

12. The breathable sole structure for footwear according to Claim 1, wherein said microporous hydrophobic membrane comprising a polyolefin.

13. The breathable sole structure for footwear according to Claim 12, wherein said polyolefin being selected from the group consisting of a polyethylene, a polypropylene, and combinations thereof.
